# EUROPEAN PATENT SPECIFICATION

(11) **EP 2 277 249 B1**
(45) Date of publication and mention of the grant of the patent: **12.11.2014**
(21) Application number: 08762694.1
(22) Date of filing: 07.05.2008
(51) Int. Cl.: H02B 11/133

(54) **REMOVABLE RACKING SYSTEM FOR AN ELECTRICAL SWITCHING APPARATUS**
ABNEHMBARER BAUGRUPPENTRÄGER FÜR ELEKTRISCHES SCHALTGERÄT
SYSTEME DE RAYONNAGE AMOVIBLE POUR APPAREIL DE COMMUTATION ELECTRIQUE

(43) Date of publication of application: 26.01.2011
(73) Proprietor: Eaton Corporation, Cleveland, Ohio 44114-2584 (US)
(72) Inventor: KOZAR, Aaron, T., Zelienople, Pennsylvania 16063 (US); OSTROWSKI, Frank, K., Natrona Heights, Pennsylvania 15065 (US); RATKUS, Paul, R., Beaver Falls, Pennsylvania 15010 (US); CONNOR, Laurence, T., Cleveland, Ohio 44114-2584 (US); OLSZEWSKI, David, M., Beaver Falls, Pennsylvania 15010 (US)
(74) Representative: Wagner, Karl H.
(86) International application number: PCT/IB2008/001129
(87) International publication number: WO 2009/136217

(56) References cited:
- WO-A-02/087037
- US-A- 5 459 293

## Description

### Cross Reference to Related Application

This application is related to commonly assigned United States Patent Application Serial No. 11/693,198, filed March 29, 2007, entitled "SPRING DRIVEN RAM FOR CLOSING AN ELECTRICAL SWITCHING APPARATUS" (Attorney Docket No. 07-EDP-044).

### BACKGROUND OF THE INVENTION

### Field of the Invention

The present invention relates to an electrical switching apparatus and, more specifically, to a modular racking system for an electrical switching apparatus.

### Background Information

An electrical switching apparatus, typically, includes a housing, at least one bus assembly having a pair of contacts, a trip device, and an operating mechanism. The housing assembly is structured to insulate and enclose the other components. The at least one pair of contacts include a fixed contact and a movable contact and typically include multiple pairs of fixed and movable contacts. Each contact is coupled to, and in electrical communication with, a conductive bus that is further coupled to, and in electrical communication with, an external line bus or a load bus. A trip device is structured to detect an over current condition and to actuate the operating mechanism. An operating mechanism is structured to both open the contacts, either manually or following actuation by the trip device, and close the contacts. That is, the operating mechanism includes both a closing assembly and an opening assembly, which may have common elements, that are structured to move the movable contact between a first, open position, wherein the contacts are separated, and a second, closed position, wherein the contacts are coupled and in electrical communication.

Typically, an electrical switching apparatus was either fixed in an enclosure or adapted to be a draw-out electrical switching apparatus. A fixed electrical switching apparatus was fixed to the line and load bus within the enclosure. A draw-out electrical switching apparatus included a disconnect or terminal on each conductive bus. Similarly, the line and load bus within the enclosure for a draw-out electrical switching apparatus each included a disconnect or terminal. Thus, as the draw-out electrical switching apparatus is being inserted into the enclosure, the draw-out electrical switching apparatus disconnects engage, and become in electrical communication with, the enclosure terminals. Conversely, when the draw-out electrical switching apparatus is moved out of the enclosure, the draw-out electrical switching apparatus disconnects disengage from the enclosure terminals.

Typically, the draw-out electrical switching apparatus includes a plurality of wheels structured to travel over a corresponding set of rails within the enclosure. In this configuration, the draw-out electrical switching apparatus disconnects and the enclosure disconnects are generally aligned. Further, a racking device is typically used to move the draw-out electrical switching apparatus into, and out of, the enclosure. The racking device includes an interlock actuator, discussed below, and a racking actuator. The racking actuator helps move the electrical switching apparatus over the rails and ensures that the disconnects fully engage each other during insertion and helps overcome frictional forces during removal.

As the enclosure line and load buses typically carry current when the electrical switching apparatus contacts are closed, it is very dangerous to move the draw-out electrical switching apparatus into, and out of, the enclosure with the contacts closed. Further, the operating mechanism closing assembly and opening assembly both utilize one or more springs to close and open the contacts. These springs, when charged, store mechanical energy. To ensure that the electrical switching apparatus contacts are not closed as the draw-out electrical switching apparatus is moved in or out of the enclosure, the draw-out electrical switching apparatus includes one or more interlock assemblies. Further, the electrical switching apparatus includes an interlock structured to release any stored mechanical energy within the opening or closing springs. An interlock assembly for the contacts engages the draw-out electrical switching apparatus operating mechanism and, when actuated, places the contacts in the first, open position. That is, if the contacts were in the second, closed position, the interlock assembly moves the contacts to, and maintains the contacts in, the first, open position, and, if the contacts were in the first, open position, the interlock assembly prevents the contacts from moving to the second, closed position. An interlock for the stored mechanical energy device also engages the draw-out electrical switching apparatus operating mechanism and, when actuated, releases the stored energy. The interlock assemblies are, typically, actuated by the racking device interlock actuator. The interlock assembly and the racking device interlock actuator are typically fixed to each other by one or more fasteners. Thus, any time the racking device is utilized, the interlock assembly should ensure that the springs are discharged, the contacts are open and the draw-out electrical switching apparatus may be safely moved.

Because a fixed electrical switching apparatus is not typically disconnected from the enclosure line and load buses, a fixed electrical switching apparatus does not include the racking device or a set of wheels structured to engage enclosure rails. Thus, manufacturers, typically, make two versions of an electrical switching apparatus; one that is structured to be a fixed electrical switching apparatus and one that is structured as a draw-out electrical switching apparatus. To reduce manufacturing costs, it would be advantageous to have a modular racking system that could be optionally added to an electrical switching apparatus. Further, customers may wish to adapt a fixed electrical switching apparatus to be a draw-out electrical switching apparatus, or vice-versa.

US 5 459 293 A describes a cradle assembly comprising a breaker-engaging frame slidably coupled to an enclosure-engaging frame. The enclosure has a rear wall provided with forwardly extending stationary terminals and the breaker has rearward facing terminals aligned for engaging the stationary terminals. The rear wall of the enclosure is fixed relative to the side walls of the enclosure and the enclosure-engaging frame of the cradle assembly engages the side walls as the breaker is mounted to the breaker-engaging frame. The cradle assembly facilitates moving the breaker between a connected and disconnected position. In the connected position, the breaker terminals are engaged with the enclosure stationary terminals. In the disconnected position, the breaker terminals are disengaged and spaced from the stationary terminals.

There is, therefore, a need for a modular racking system that may be removably coupled to an electrical switching apparatus.

There is a further need for a modular racking system wherein the modular racking system may be added to the electrical switching apparatus late in the manufacturing process or by a customer.

### SUMMARY OF THE INVENTION

These needs, and other, are met by at least one embodiment of the present invention which provides a modular racking system as set forth in claim 1. Further embodiments of the invention are claimed in the dependent claims. It is noted that the electrical switching apparatus is made with at least one interlock assembly coupled to the operating mechanism structured to place the contacts in the open position and discharge any stored mechanical energy. The modular racking system includes a carriage assembly structured to support electrical switching apparatus and at least one cam follower structured to be removably coupled to the electrical switching apparatus. The carriage assembly includes a set of wheels structured to engage the enclosure rails and at least one cam structured to functionally engage the at least one cam follower. The cam is structured to be actuated by the racking actuator. The at least one cam follower is structured to functionally engage and actuate the interlock assembly. When the electrical switching apparatus is coupled to the modular racking system and moved into, or out of, an enclosure by a racking actuator, the racking actuator actuates the cam. The cam actuates the cam follower which, in turn, actuates the interlock assembly. When the interlock assembly is actuated, the electrical switching apparatus contacts are placed in the first, open position and any stored mechanical energy is discharged.

The modular racking system is removably coupled to the electrical switching apparatus and the electrical switching apparatus may be easily detached from the modular racking system. That is, unlike a typical interlock and racking device interlock actuator that are coupled by fasteners or other hardware, the present invention provides for a non-fixed coupling between the interlock and racking device interlock actuator. This coupling is the cam and at least one cam follower set forth above. The cam and the at least one cam follower interface with each other. The cam is, preferably, disposed on the carriage assembly. Further, the at least one cam follower is removably coupled to an external, or easily accessed, portion of the electrical switching apparatus.

In this configuration, a fixed electrical switching apparatus that has an interlock assembly may be converted to a draw-out electrical switching apparatus by disposing the electrical switching apparatus on the carriage and coupling the at least one cam follower to the electrical switching apparatus. Because the carriage is a separate component structured to support electrical switching apparatus and because the at least one cam follower is removably coupled to an external, or easily accessed, portion of the electrical switching apparatus, the modular racking system may be added to the electrical switching apparatus late in the manufacturing process or even after the manufacture of the electrical switching apparatus is complete.

### BRIEF DESCRIPTION OF THE DRAWINGS

A full understanding of the invention can be gained from the following description of the preferred embodiments when read in conjunction with the accompanying drawings in which:
Figure 1 is an exploded view of an electrical switching apparatus and a modular racking system.
Figure 2 is a detail view of one side of the electrical switching apparatus.
Figure 3 is a detail view of the other side of the electrical switching apparatus.
Figure 4 is an isometric view of an electrical switching apparatus and a modular racking system with an interlock operator in a second position.
Figure 5 is an isometric view of an electrical switching apparatus and a modular racking system with an interlock operator in a first position.
Figure 6 is an isometric view of an electrical switching apparatus and a modular racking system with another interlock operator in a second position.
Figure 7 is an isometric view of an electrical switching apparatus and a modular racking system with another interlock operator in a first position.
Figure 8 is an isometric view of an electrical switching apparatus and a modular racking system with a door assembly interlock in a first position.

### DESCRIPTION OF THE PREFERRED EMBODIMENTS

As used herein, "coupled" means a link between two or more elements, whether direct or indirect, so long as a link occurs.

As used herein, "directly coupled" means that two elements are directly in contact with each other.

As used herein, "fixedly coupled" or "fixed" means that two components so coupled move as one.

As used herein, the phrase "removably coupled" means that one component is coupled with another component in an essentially temporary manner. That is, the two components are coupled in such a way that the joining or separation of the components is easy and would not damage the components. For example, two components secured to each other with a limited number of readily accessible fasteners are "removably coupled" whereas two components that are welded together or joined by difficult to access fasteners are not "removably coupled." A "difficult to access fastener" is one that requires the removal of one or more other components prior to accessing the fastener wherein the "other component" is not an access device such as, but not limited to, a door.

As used herein, "correspond" indicates that two structural components are sized to engage each other with a minimum amount of friction. Thus, an opening which corresponds to a member is sized slightly larger than the member so that the member may pass through the opening with a minimum amount of friction.

As used herein, "functionally engage" means that, where two components are structured to move, a first component that engages the second component so as to move the second component may be said to "functionally engage" the second component.

As used herein, the phrase "interface with" means that two or more components are coupled together without a required fastening device or means. By way of a non-limiting example, a key may be said to interface with a keyhole. That is, a key engages, or functionally engages, the keyhole, but no fastening device or means, such as a bolt or glue is required. It is further noted that, while no fastening device or means is required, a fastening device or means may still be used.

As used herein, when an interlock assembly "makes safe" an electrical switching apparatus operating mechanism by placing the contacts in an open configuration and/or discharging any significant mechanical energy. "Significant mechanical energy" is typically stored in springs such as, but not limited to, the closing springs and the opening springs.

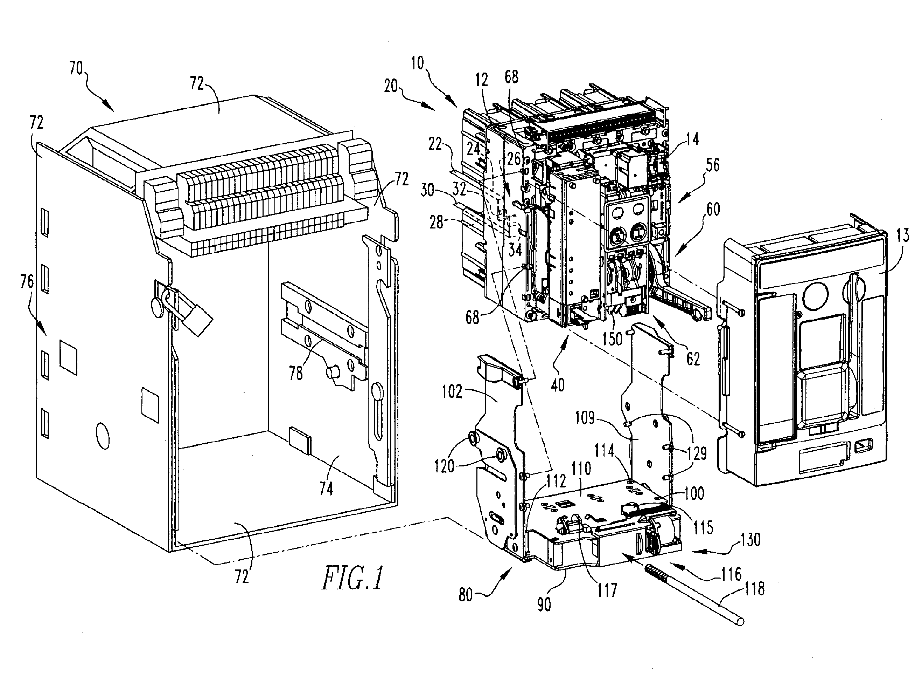

As shown in Figure 1, an electrical switching apparatus 10 includes a housing assembly 12 defining an enclosed space 14. The housing assembly 12 preferably includes a removable front cover 13. The electrical switching apparatus 10 further includes a conductor assembly 20 (shown schematically) having at least one line terminal 22, at least one line conductor 24, at least one pair of separable contacts 26, at least one load conductor 28 and at least one load terminal 30. The at least one pair of separable contacts 26 include a fixed contact 32 and a movable contact 34. The movable contact 34 is structured to move between a first, open position, wherein the contacts 32, 34 are separated, and a second, closed position, wherein the contacts 32, 34 contact each other and are in electrical communication. The electrical switching apparatus 10 further includes a trip device 40 and an operating mechanism 50. The operating mechanism 50 is generally structured to move the at least one pair of separable contacts 26 between the first, open position and the second, closed position. The operating mechanism 50 utilizes one or more springs (not shown) to open and close the at least one pair of separable contacts 26. These springs may be charged manually or by a motor operator. The trip device 40 is structured to detect an over current condition and, upon detecting such a condition, to actuate the operating mechanism 50 to open the at least one pair of separable contacts 26.

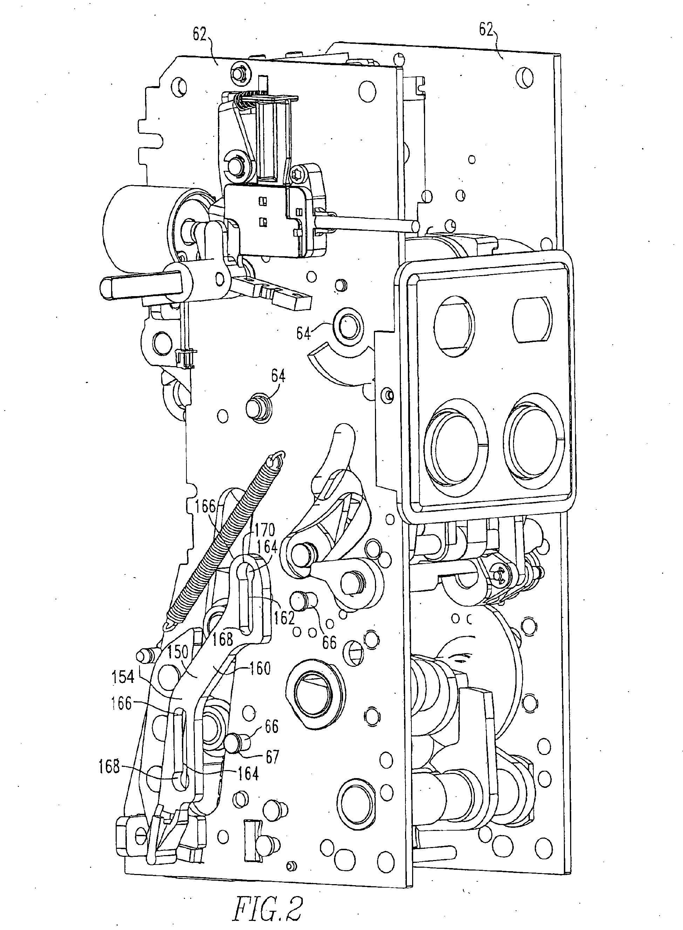

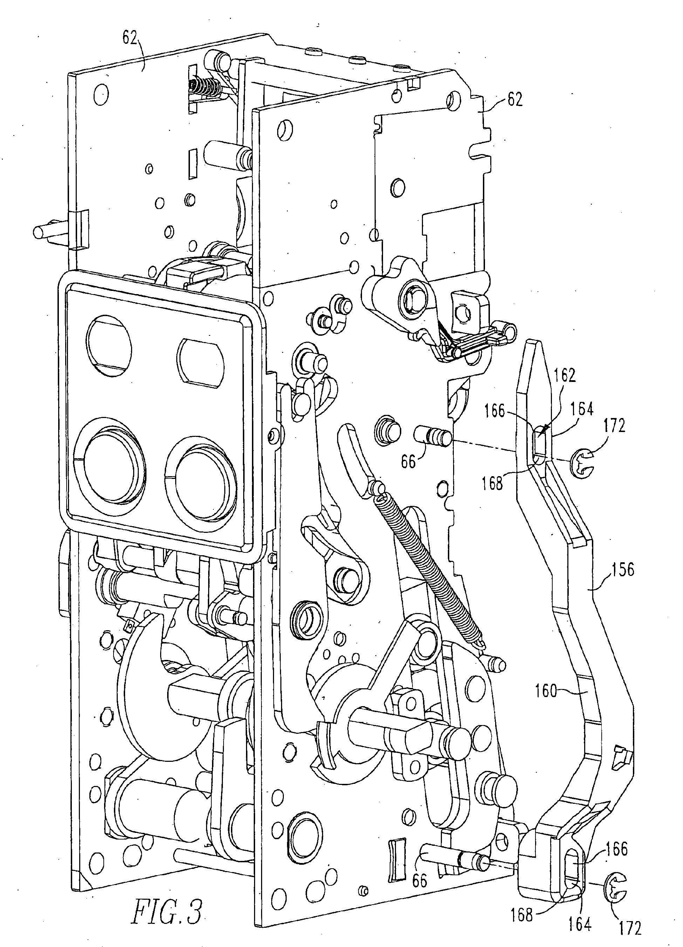

The operating mechanism 50 further includes at least one interlock assembly 60. The at least one interlock assembly 60 is structured to place the at least one pair of separable contacts 26 in the first, open position when actuated. The housing assembly 12, preferably, includes a plurality of side plates 62 structured to support the other electrical switching apparatus 10 components. As shown in Figures 2 and 3, the side plates 62 are generally parallel and include a plurality of openings 64 through which the other electrical switching apparatus 10 components may extend. The side plates 62 further include a plurality of laterally extending pins 66 structured to support the at least one cam follower 150, discussed below. The housing assembly 12 may also include a plurality of external fastener openings 68 (Fig. 1) positioned to align with the carriage assembly plurality of fasteners 129, discussed below. Further, on the outer sides of the side plates 62, the at least one interlock assembly 60 includes one, or more, actuators 69. The interlock assembly actuators 69 are structured to move between a first position and a second position. When the interlock assembly actuator 69 is moved into the first position, the at least one interlock assembly 60 is actuated.

The electrical switching apparatus 10 may be disposed in an enclosure 70. The enclosure 70 includes a plurality of sidewalls 72 defining an enclosed space. The enclosure sidewalls 72 include a right sidewall 74 and a left sidewall 76. The right sidewall 74 and the left sidewall 76 each have an elongated, generally horizontal rail 78 coupled thereto.

As shown in Figure 1, a modular racking system 80 is structured to be removably coupled to the electrical switching apparatus 10 and structured to assist in moving the electrical switching apparatus 10 in and out of the enclosure 70. The racking system 80 includes a carriage assembly 90 and at least one cam follower 150. The carriage assembly 90 includes a base assembly 100, a first vertical side member 102 and a second vertical side member 104. The base assembly 100 includes a base plate 110 with a first lateral side 112, a second lateral side 114, and at least one cam 116 structured to functionally engage the at least one cam follower 150 as discussed below. The base assembly 100 is structured to support the electrical switching apparatus 10. The at least one cam 116 is structured to be actuated by a racking operator 118, discussed below. The at least one cam 116, preferably, includes a first cam 115 and a second cam 117. The first vertical side member 102 is coupled to the base assembly first lateral side 112. The second vertical side member 104 is coupled to the base assembly second lateral side 114. Thus, the combination of the base plate 110 with the first lateral side 112 and the second lateral side 114 have a generally U-shaped configuration. The base plate 110 has a width sized to accommodate the electrical switching apparatus 10. The first vertical side member 102 has at least one wheel 120, and preferably two wheels 120, structured to engage an enclosure rail 78. The second vertical side member 104 also has at least one wheel 120, and preferably two wheels 120, structured to engage an enclosure rail 78. Both the first vertical side member 102 and the second vertical side member 104 include a plurality of fasteners 129 structured to removably couple the electrical switching apparatus 10 to the carriage assembly 90.

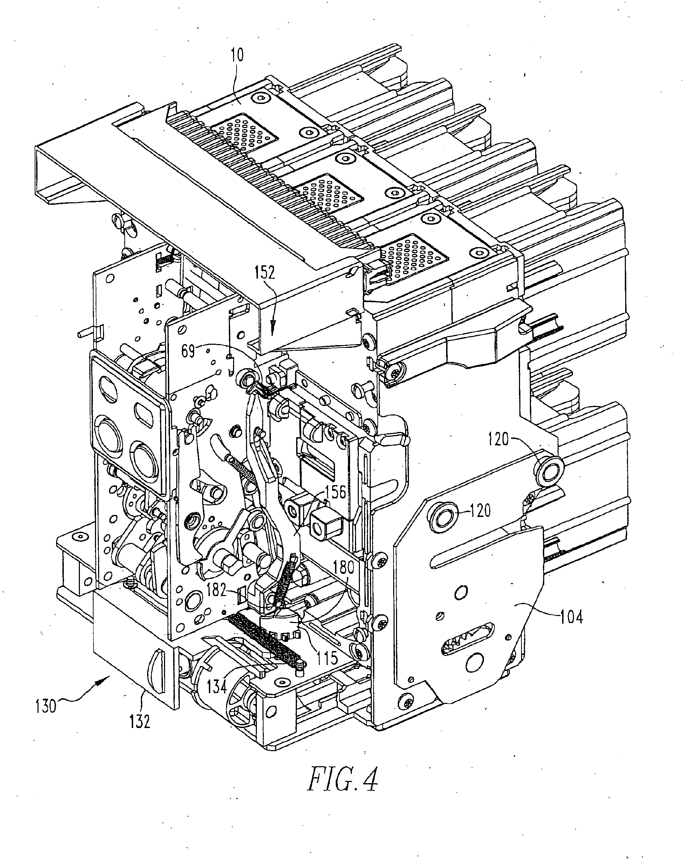

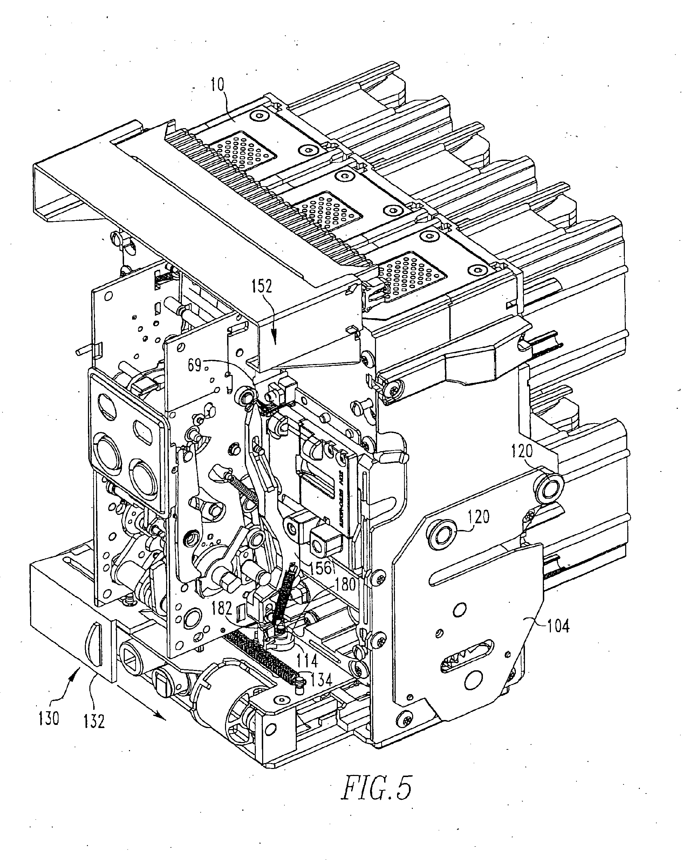

As shown in Figures 4 and 5, the base assembly 100, preferably, includes a racking operator door assembly 130. The door assembly 130 has a movable door 132 and a cam actuator link assembly 134. The door 132 is structured to be moved between a first, open position (Fig. 5) and a second, closed position (Fig. 4). It is noted that the door 132 first, open position does not require the door 132 to be fully open. The door 132 is functionally coupled to, and structured to actuate, the cam actuator link assembly 134. The cam actuator link assembly 134 is structured to move between a first, actuated position and a second, un-actuated position. The cam actuator link assembly 134 being in the first, actuated position when the door 132 is in the first, open position and the cam actuator link assembly 134 being in the second, un-actuated position when the door 132 is in the second, closed position. The cam actuator link assembly 134 is further coupled to the at least one cam 116 and, preferably to the first cam 115. When the door 132 is moved to the first, open position, the cam actuator link assembly 134 is moved to its first, actuated position and the at least one cam 116 is actuated.

The base assembly 100 may also include a racking operator link assembly 140. The racking operator link assembly 140 is structured to be coupled to, and actuated by, the racking operator 118. The racking operator link assembly 140 is further coupled to, and structured to actuate, the second cam 117. Thus, when the racking operator 118 is actuated to move the electrical switching apparatus 10 into, or out of, the enclosure 70, the second cam 117 is actuated via the racking operator link assembly 140.

The at least one cam follower 150 is an interlock operator 152. That is, the at least one cam follower 150 is structured to functionally engage and actuate the interlock assembly 60. The at least one cam follower 150, preferably, includes a first cam follower 154 (Figs. 3-5) and a second cam follower 156 (Figs. 2, 6, and 7). Each cam follower 154, 156 has an elongated body 160 which is not necessarily generally straight. Each cam follower body 160 has at least one opening 162 structured to be disposed over a housing assembly pin 66. Preferably, the at least one opening 162 is two elongated slots 164. The slots 164 extend generally parallel to each other. Each slot 164 has a first end 166 and a second end 168. The slots 164 are structured to be disposed over two of the extending pins 66. In this configuration, the at least one cam follower 150 is structured to move between a first position, wherein each pin 66 is adjacent to the first end of the associated slot 164, and a second position, wherein each pin 66 is adjacent to the second end of the associated slot 164.

The at least one cam follower 150 is, preferably, coupled to the electrical switching apparatus 10 without fasteners. That is, as shown in Figure 2, each slot 164 may have a key 170 that is a wide portion. The pins 66 would have a flat head 67 sized to pass through the key 170, but which is too large to pass through the slot 164. Alternatively, a non-threaded fastener 172, such as, but not limited to, an E-clip, may be used to removably couple the at least one cam follower 150 to the electrical switching apparatus 10.

In this configuration, the electrical switching apparatus 10 may be removably coupled to the modular racking system 80. The at least one cam follower 150 is removably coupled to the electrical switching apparatus 10 as set forth above. When the electrical switching apparatus 10 is disposed on the carriage assembly 90, the carriage assembly 90 at least one cam 116 functionally engages the at least one cam follower 150. More specifically, the first cam 115 interfaces with the first cam follower 154 and the second cam 117 interfaces with the second cam follower 156. The electrical switching apparatus 10 may be further secured to the carriage assembly 90 by threading the carriage assembly plurality of fasteners 129 into the housing assembly openings 68. A racking operator 118, which is typically an elongated, screw operated device, is coupled to the base assembly 100 via the door assembly 130. The racking operator 118 also functionally engages the racking operator link assembly 140 which further functionally engages the second cam 117. Thus, prior to the racking operator 118 passing through the door 132, the door 132 is moved from the second, closed position (Fig. 4) to the first, open position (Fig. 5). This causes the cam actuator link assembly 134 to move into the first, actuated position which in turn actuates the first cam 115. As shown in Figures 4 and 5, the first cam 115 is preferably a disk shaped body 180 having an inclined upper surface 182. Thus, the first cam 115 is actuated by rotating the first cam body 180 between a first position (Fig. 5) and a second position (Fig. 4). When the first cam 115 is actuated, the first cam follower 154 moves thereby actuating the interlock assembly 60 causing the at least one pair of separable contacts 26 to be placed in the first, open position. That is, as shown in Figures 4 and 5, the first cam 115 moves the first cam follower 154 between a first position a first position (Fig. 5) and a second position (Fig. 4). The upper end of the first cam follower 154 engages an interlock assembly actuator 69. Thus, when the first cam 115 rotates, the first cam follower 154 is moved upwards as the first cam follower 154 slides over the first cam body inclined upper surface 182. As the first cam follower 154 is moved upwardly, the first cam follower 154 moves the interlock assembly actuator 69 from the second position to the first position, thereby actuating the at least one interlock assembly 60 causing the at least one pair of separable contacts 26 to be placed in the first, open position and/or discharging the operating mechanism springs.

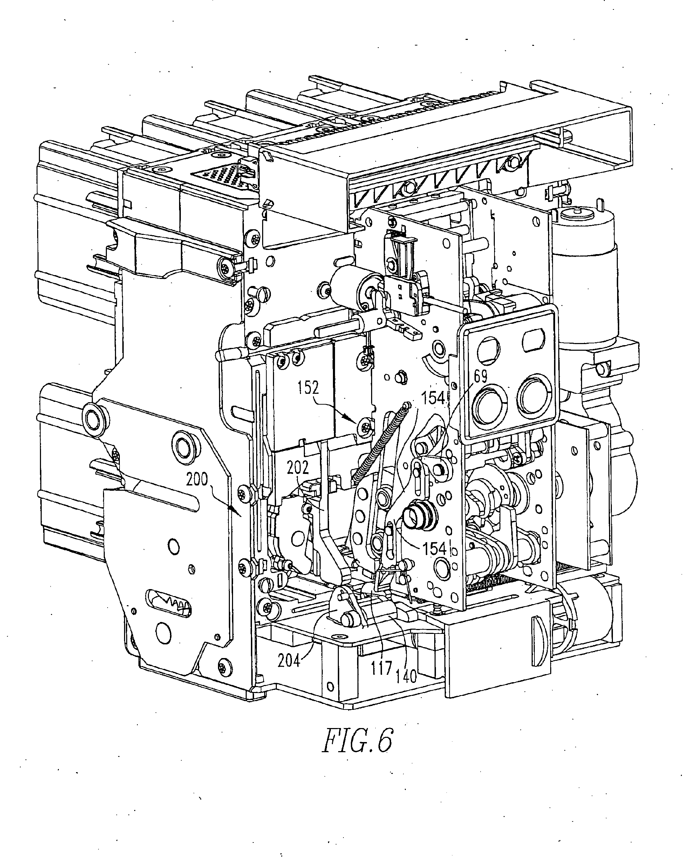

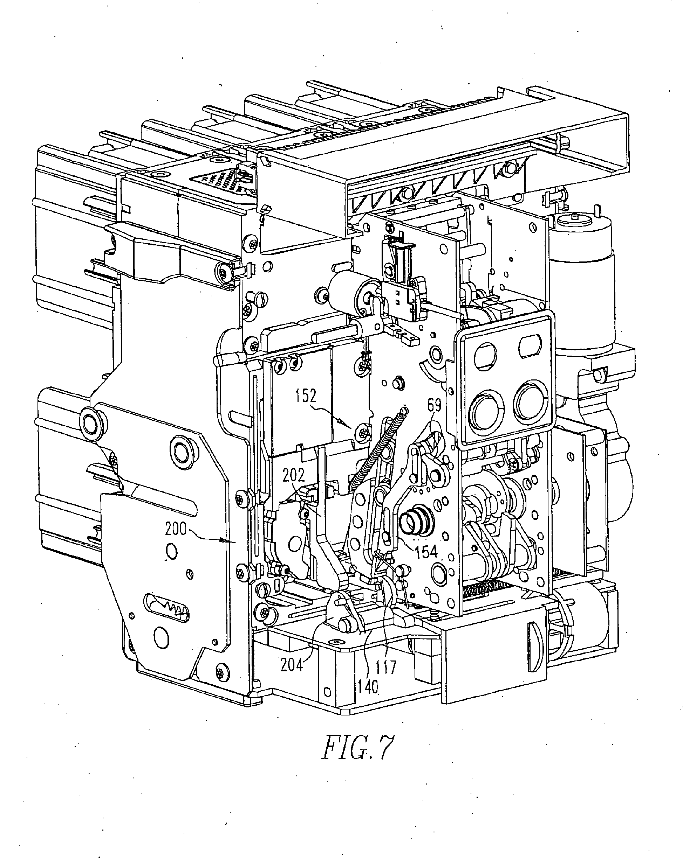

Alternatively, when the racking operator 118 is actuated to insert or remove the electrical switching apparatus 10 relative to the enclosure 70, the racking operator 118 also actuates the racking operator link assembly 140. The racking operator link assembly 140 further actuates the second cam 117 to move from a second position (Fig. 6) to a first position (Fig. 7). As the second cam 117 moves into the first position, the second cam 117 actuates the second cam follower 156. That is, the second cam follower 156 is lifted. The upper end of the second cam follower 156 is also coupled to an interlock assembly actuator 69. As the second cam follower 156 is moved upwardly, the second cam follower 156 moves the interlock assembly actuator 69 from the second position to the first position, thereby actuating the at least one interlock assembly 60 causing the at least one pair of separable contacts 26 to be placed in the first, open position and/or discharging the operating mechanism springs.

In addition to placing the contacts 26 in the open position, the at least one interlock assembly 60 is, preferably, structured to prevent coupling the racking operator 118 to the base assembly 100 when the contacts 26 are closed. That is, there are rare instances when the contacts 26 may become fused together. When this occurs, the operating mechanism 50 may not be able to move the contacts 26 into the open position. Thus, it may be dangerous to attempt to remove the electrical switching apparatus 10 from the enclosure 70. To reduce the chance of a user attempting to remove the electrical switching apparatus 10 from the enclosure 70 when the contacts 26 are closed, there is, preferably, a door assembly interlock 200.

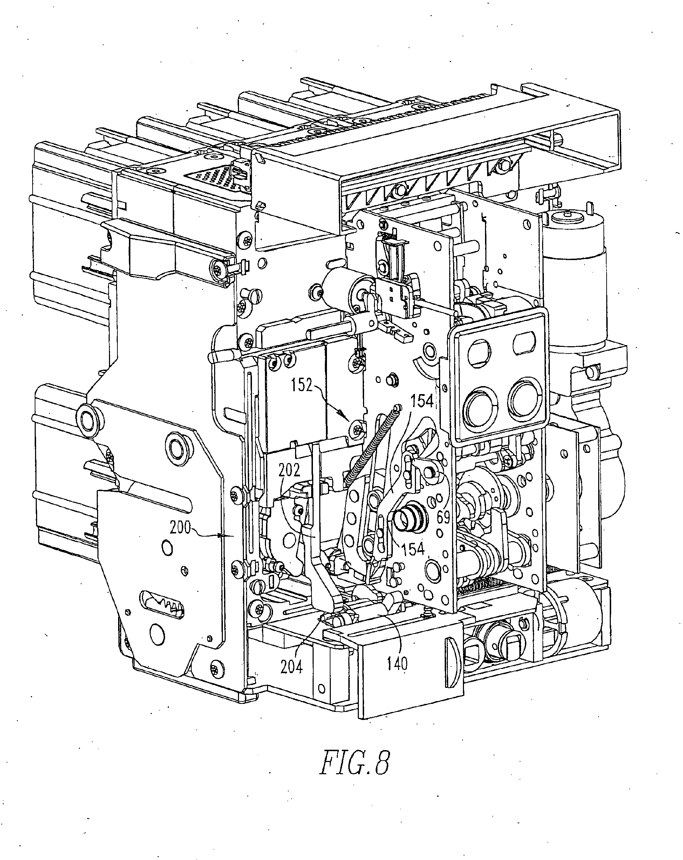

The door assembly interlock 200 includes a cam actuator 202 and a door cam 204. The door assembly interlock cam actuator 202 is disposed on the electrical switching apparatus 10 and is coupled to the operating mechanism and structured to be responsive to the position of the contacts 26. The door assembly interlock cam actuator 202 is structured to move between a first position (Fig. 8) when the contacts 26 are open, and a second position (Fig. 6) when the contacts 26 are closed. As shown, the door assembly interlock cam actuator 202 is an elongated member structured between move from a lower, first position (Fig. 8) to an upper second position (Fig. 6). The door cam 204 is disposed adjacent to the second cam 117. The door assembly interlock cam actuator 202 and the door cam 204 interface with each other. The door cam 204 is structured to move between a first position

(Fig. 8) and a second position (Fig. 6) in response to actuation by the door assembly interlock cam actuator 202. The door cam 204 is moved from the second position to the first position when the door assembly interlock cam actuator 202 moves from the second position to the first position. The door cam 204 is coupled to the door assembly movable door 132 and structured to prevent the door assembly movable door 132 from being opened when the door cam 204 is in the second position.

## Claims

1. A modular racking system (80) for an electrical switching apparatus (10), said electrical switching apparatus (10) having a housing assembly (12) with at least two generally parallel side plates (62), an operating mechanism (50) coupled to said side plates (62) and structured to move at least one pair of separable contacts (26) between a first open position and a second closed position, said operating mechanism (50) further including an interlock assembly (60) structured to make safe the operating mechanism (50) actuated, said electrical switching apparatus (10) being adapted to be moved in and out of an enclosure (70) by a racking operator (118), said enclosure (70) having a pair of rails (78), said modular racking system (80) comprising:
a carriage assembly (90) structured to support said electrical switching apparatus (10), said carriage assembly (90) having at least one wheel (120) structured to engage each said enclosure rail (78) and at least one cam (115,117) structured to functionally engage a cam follower (154;156), **characterised in that** said at least one cam (115,117) is structured to be actuated by a racking operator (118);
at least one cam follower (154;156) structured to be removably coupled to at least one of said electrical switching apparatus side plates (62), said at least one cam follower (154;156) structured to functionally engage said interlock assembly (60);
wherein, when said at least one cam follower (154,156) is coupled to said electrical switching apparatus (10), said cam follower (154,156) functionally engages said interlock assembly (60);
wherein when said electrical switching apparatus (10) is disposed on said carriage assembly (90), said carriage assembly's (90) at least one cam (115,116) functionally engages said at least one cam follower (154,156); and
wherein when said at least one cam (115,117) is actuated by said racking operator (118), said carriage assembly's (90) at least one cam (115,117) actuates said at least one cam follower (154,156), and said at least one cam follower (154,156) actuates said interlock assembly (60).

2. The modular racking system (80) of claim 1 wherein said electrical switching apparatus (10) interfaces with said carriage assembly (90).

3. The modular racking system (80) of claim 1 wherein said carriage assembly (90) includes a plurality of fasteners (129) structured to removably couple said electrical switching apparatus (10) to said carriage assembly (90).

4. The modular racking system (80) of any one of the preceding claims wherein said at least one cam interfaces with said at least one cam follower (150).

5. The modular racking system (80) of any one of the preceding claims wherein:
said carriage assembly (90) includes a racking operator door assembly (130), said door assembly (130) having a movable door (132) and a cam actuator link assembly (140);
said door (132) structured to be moved between a first, open position and a second, closed position, said door (132) further operatively coupled to said cam actuator link assembly (140);
said cam actuator link assembly (140) structured to move between a first, actuated position and a second, un-actuated position, said cam actuator link assembly (140) being in said first, actuated position when said door (132) is in said first, open position and said cam actuator link assembly (140) being in said second, un-actuated position when said door (132) is in said second, closed position;
said cam actuator link assembly (140) further coupled to said at least one cam ; and
wherein when said door (132) is moved to said first, open position, said cam actuator link assembly (140) is moved to said first, actuated position and said at least one cam is actuated.

6. The modular racking system (80) of claim 5 wherein:
said at least one cam includes two cams, a first cam (115) and a second cam (117);
said at least one cam follower includes two cam followers, a first cam follower (154) and a second cam follower (156);
wherein when said electrical switching apparatus (10) is disposed on said carriage assembly (90), said carriage assembly first cam (115) functionally engages said first cam follower (154);
when said electrical switching apparatus (10) is disposed on said carriage assembly (90), said carriage assembly second cam (117) functionally engages said second cam follower (156);
said first cam (115) structured to be actuated when said door (132) is moved to said first position; and
said second cam (117) structured to be actuated when said racking operator (118) is actuated.

7. The modular racking system (80) of claim 5 wherein:
said carriage assembly (90) includes a door assembly interlock (200) having a cam actuator (202) and a door cam (204);
said door assembly interlock cam actuator (202) coupled to said operating mechanism (50) and structured to be responsive to the position of said contacts (26), said door assembly interlock cam actuator structured (202) to move between a first position when said contacts (26) are open, and a second position when said contacts (26) are closed;
said door cam (204) structured to move between a first position and a second position in response to actuation by said door assembly interlock cam actuator (202);
said door cam (204) coupled to said door assembly (130) is coupled to said door assembly movable door (132) and is structured to prevent the door assembly movable door (132) from being opened when the door cam (204) is in the second position.

8. The modular racking system (80) of any one of the preceding claims wherein:
said carriage assembly (90) includes a base assembly (100), a first vertical side member (102), and a second side member (104);
said base assembly (100) having a base plate (110) with a first lateral side (112), and a second lateral side (114), said base assembly (100) structured to support said electrical switching apparatus (10);
said first vertical side member (102) coupled to said base assembly first lateral side (112);
said second vertical side member (104) coupled to said base assembly second lateral side (114);
said first vertical side member (102) having at least one wheel (120) structured to engage one said enclosure rail (78); and
said second vertical side member (104) having at least one wheel (120) structured to engage one said enclosure rail (78).

9. The modular racking system (80) of claim 8 wherein:
said base assembly (100) includes said racking operator door assembly (130).

10. The modular racking system (80) of claim 9 wherein said first vertical side member (102) and said second vertical side member (104) each include a plurality of fasteners (129) structured to removably couple said electrical switching apparatus (10) to said carriage assembly (90).

## Patentansprüche

1. Ein modulares Baugruppenträgersystem (80) für eine elektrische Schaltvorrichtung (10), wobei die elektrische Schaltvorrichtung (10) eine Gehäuseanordnung (12) mit wenigstens zwei im Wesentlichen parallelen Seitenplatten (62) hat, einen Bedienmechanismus (50), der an die Seitenplatten (62) gekoppelt ist und der strukturiert ist, um wenigstens ein Paar von trennbaren Kontakten (26) zwischen einer ersten offenen Position und einer zweiten geschlossenen Position zu bewegen, wobei der Bedienmechanismus (50) weiter eine Verriegelungsanordnung (60) beinhaltet, die strukturiert ist, um den betätigten Bedienmechanismus (50) zu sichern, wobei die elektrische Schaltvorrichtung (10) ausgelegt ist, um durch eine Baugruppenträgerbedienungsvorrichtung (118) in ein Gehäuse (70) und aus diesem heraus bewegt zu werden, wobei das Gehäuse (70) ein Paar von Schienen (78) aufweist, wobei das modulare Baugruppenträgersystem (80) Folgendes aufweist:
eine Trägeranordnung (90), die strukturiert ist, um die elektrische Schaltvorrichtung (10) zu tragen, wobei die Trägeranordnung (90) wenigstens ein Rad (120) hat, das strukturiert ist, um mit jeder Gehäuseschiene (78) in Eingriff zu kommen und wenigstens einen Nocken (115, 117), der strukturiert ist, um mit einem Nockenmitnehmer (154, 156) funktional in Eingriff zu kommen, **dadurch gekennzeichnet, dass** wenigstens ein Nocken (115, 117) strukturiert ist, um durch eine Baugruppenträgerbedienungsvorrichtung (118) betätigt zu werden;
wenigstens einen Nockenmitnehmer (154, 156), der strukturiert ist, um entfernbar mit wenigstens einer der Seitenplatten (62) der elektrischen Schaltvorrichtung gekoppelt zu sein, wobei der wenigstens eine Nockenmitnehmer (154, 156) strukturiert ist, um funktional mit der Verriegelungsanordnung (60) in Eingriff zu kommen;
wobei, wenn der wenigstens eine Nockenmitnehmer (154, 156) an die elektrische Schaltvorrichtung (10) gekoppelt ist, der Nockenmitnehmer (154, 156) funktional mit der Verriegelungsanordnung (60) in Eingriff kommt;
wobei, wenn die elektrische Schaltvorrichtung (10) auf der Trägeranordnung (90) angeordnet ist, der wenigstens eine Nocken (115, 116) der Trägeranordnung funktional mit dem wenigstens einen Nockenmitnehmer (154, 156) in Eingriff kommt; und
wobei wenn der wenigstens eine Nocken (115, 117) von der Baugruppenträgerbedienungsvorrichtung (118) betätigt wird, der wenigstens eine Nocken (115, 117) der Trägeranordnung (90) den wenigstens einen Nockenmitnehmer (154, 156) betätigt und der wenigstens eine Nockenmitnehmer (154, 156) die Verriegelungsanordnung (60) betätigt.

2. Modulares Baugruppenträgersystem (80) nach Anspruch 1, wobei die elektrische Schaltvorrichtung (10) eine Schnittstelle mit der Trägeranordnung (90) hat.

3. Modulares Baugruppenträgersystem (80) nach Anspruch 1, wobei die Trägeranordnung (90) eine Vielzahl von Befestigungsvorrichtungen (129) aufweist, die strukturiert sind, um auf entfernbare Weise die elektrische Schaltvorrichtung (10) mit der Trägeranordnung (90) zu koppeln.

4. Modulares Baugruppenträgersystem (80) nach einem der vorhergehenden Ansprüche, wobei der wenigstens eine Nocken eine Schnittstelle mit dem wenigstens einen Nockenmitnehmer (150) hat.

5. Modulares Baugruppenträgersystem (80) nach einem der vorhergehenden Ansprüche, wobei:
die Trägeranordnung (90) eine Türanordnung (130) der Baugruppenträgerbedienungsvorrichtung beinhaltet, wobei die Türanordnung (130) eine bewegliche Tür (132) und eine Nockenbetätigungsverbindungsanordnung (140) hat;
wobei die Tür (132) strukturiert ist, um zwischen einer ersten, offenen Position und einer zweiten, geschlossenen Position bewegt zu werden, wobei die Tür (132) weiter betriebsmäßig an die Nockenbetätigungsverbindungsanordnung (140) gekoppelt ist;
wobei die Nockenbetätigungsverbindungsanordnung (140) strukturiert ist, um sich zwischen einer ersten, betätigten Position und einer zweiten, nicht betätigten Position zu bewegen, wobei die Nockenbetätigungsverbindungsanordnung (140) in der ersten, betätigten Position ist, wenn die Tür (132) in der ersten, offenen Position ist und die Nockenbetätigungsverbindungsanordnung (140) in der zweiten, nicht betätigten Position ist, wenn die Tür (132) in der zweiten, geschlossenen Position ist;
wobei die Nockenbetätigungsverbindungsanordnung (140) weiter an den wenigstens einen Nocken gekoppelt ist; und
wobei, wenn die Tür (132) in die erste, offene Position bewegt wird, die Nockenbetätigungsverbindungsanordnung (140) in die erste, betätigte Position bewegt wird und wobei wenigstens ein Nocken betätigt ist.

6. Modulares Baugruppenträgersystem (80) nach Anspruch 5, wobei:
der wenigstens eine Nocken zwei Nocken beinhaltet, einen ersten Nocken (115) und einen zweiten Nocken (117);
der wenigstens eine Nockenmitnehmer zwei Nockenmitnehmer beinhaltet, einen ersten Nockenmitnehmer (154) und einen zweiten Nockenmitnehmer (156);
wobei, wenn die elektrische Schaltvorrichtung (10) auf der Trägeranordnung (90) angeordnet ist, der erste Nocken (115) der Trägeranordnung funktional mit dem ersten Nockenmitnehmer (154) in Eingriff steht;
wobei, wenn die elektrische Schaltvorrichtung (10) auf der Trägeranordnung (90) angeordnet ist, der zweite Nocken (117) der Trägeranordnung funktional mit dem zweiten Nockenmitnehmer (156) in Eingriff steht;
wobei der erste Nocken (115) so strukturiert ist, dass er betätigt wird, wenn die Tür (132) in die erste Position bewegt wird; und
wobei der zweite Nocken (117) so strukturiert ist, dass er betätigt wird, wenn die Baugruppenträgerbedienungsvorrichtung (118) betätigt wird.

7. Modulares Baugruppenträgersystem (80) nach Anspruch 5, wobei.
wobei die Trägeranordnung (90) eine Türanordnungsverriegelung (200) mit einem Nockenbetätiger (202) und einer Türnocke (204) beinhaltet;
wobei der Nockenbetätiger (202) der Türanordnungsverriegelung an den Bedienmechanismus (50) gekoppelt ist und strukturiert ist, um auf die Position der Kontakte (26) anzusprechen, wobei der Nockenbetätiger (202) der Türanordnungsverriegelung strukturiert ist, um sich zwischen einer ersten Position, in der die Kontakte (26) offen sind, und einer zweiten Position, in der die Kontakte (26) geschlossen sind, zu bewegen;
wobei die Türnocke (204) strukturiert ist, um sich zwischen einer ersten Position und einer zweiten Position ansprechend auf eine Betätigung durch den Nockenbetätiger (202) der Türanordnungsverriegelung zu bewegen;
wobei die Türnocke (204), die an die Türanordnung (130) gekoppelt ist, an die bewegbare Tür (132) der Türanordnung gekoppelt ist und strukturiert ist, um zu verhindern, dass die bewegbare Tür (132) der Türanordnung geöffnet wird, wenn die Türnocke (204) in der zweiten Position ist.

8. Modulares Baugruppenträgersystem (80) nach einem der vorhergehenden Ansprüche, wobei:
die Trägeranordnung (90) eine Basisanordnung (100), ein erstes vertikales Seitenglied (102) und ein zweites Seitenglied (104) aufweist;
wobei die Basisanordnung (100) eine Basisplatte (110) mit einem ersten Seitenteil (112) und einem zweiten Seitenteil (114) hat, wobei die Basisanordnung (100) strukturiert ist, um die elektrische Schaltvorrichtung (10) zu tragen;
wobei das erste vertikale Seitenglied (102) an das erste Seitenteil (112) der Basisanordnung gekoppelt ist;
wobei das zweite vertikale Seitenglied (104) an das zweite Seitenteil (114) der Basisanordnung gekoppelt ist;
wobei das erste vertikale Seitenglied (102) wenigstens ein Rad (120) hat, das strukturiert ist, um mit einer Gehäuseschiene (78) ein Eingriff zu kommen; und
wobei das zweite vertikale Seitenglied (104) wenigstens ein Rad (120) hat, das strukturiert ist, um mit einer Gehäuseschiene (78) in Eingriff zu kommen.

9. Modulares Baugruppenträgersystem (80) nach Anspruch 8, wobei:
die Basisanordnung (100) die Türanordnung (130) der Baugruppenträgerbedienungsvorrichtung beinhaltet.

10. Modulares Baugruppenträgersystem (80) nach Anspruch 9, wobei das erste vertikale Seitenglied (102) und das zweite vertikale Seitenglied (104) jeweils eine Vielzahl von Befestigungsvorrichtungen (129) aufweist, die strukturiert sind, um auf entfernbare Weise die elektrische Schaltvorrichtung (10) an die Trägeranordnung (90) zu koppeln.

## Revendications

1. Système de rayonnage modulaire (80) pour un appareil de commutation électrique (10), l'appareil de commutation électrique (10) comportant un ensemble boîtier (12) muni d'au moins deux plaques latérales généralement parallèles (62), d'un mécanisme d'actionnement (50) couplé aux plaques latérales (62) et agencé pour déplacer au moins une paire de contacts séparables (26) entre une première position ouverte et une deuxième position fermée, le mécanisme d'actionnement (50) comprenant en outre un ensemble de verrouillage réciproque (60) agencé pour sécuriser le mécanisme d'actionnement (50) actionné, l'appareil de commutation électrique (10) étant adapté à être déplacé pour entrer et sortir d'une enceinte (70) par un opérateur de rayonnage (118), l'enceinte (70) comportant une paire de rails (78), le système de rayonnage modulaire (80) comprenant :
un ensemble chariot (90) agencé pour supporter l'appareil de commutation électrique (10), l'ensemble chariot (90) comportant au moins une roue (120) agencée pour contacter chaque rail d'enceinte (78) et au moins une came (115, 117) agencée pour contacter fonctionnellement un suiveur de came (154, 156), **caractérisé en ce que** ladite au moins une came (115, 117) est agencée pour être actionnée par un opérateur de rayonnage (118) ;
au moins un suiveur de came (154, 156) agencé pour être couplé de façon amovible à au moins l'une des plaques latérales (62) de l'appareil de commutation électrique, ledit au moins un suiveur de came (154, 156) étant agencé pour contacter fonctionnellement l'ensemble de verrouillage réciproque (60) ;
dans lequel, lorsque ledit au moins un suiveur de came (154, 156) est couplé à l'appareil de commutation électrique (10), le suiveur de came (154, 156) contacte fonctionnellement l'ensemble de verrouillage (60) ;
dans lequel, lorsque l'appareil de commutation électrique (10) est disposé sur l'ensemble chariot (90), ladite au moins une came (115, 116) de l'ensemble chariot (90) contacte fonctionnellement ledit au moins un suiveur de came (154, 156) ; et
dans lequel lorsque ladite au moins une came (115, 117) est actionnée par l'opérateur de rayonnage (118), ladite au moins une came (115, 117) de l'ensemble chariot (90) actionne ledit au moins un suiveur de came (154, 156), et ledit au moins un suiveur de came (154, 156) actionne l'ensemble de verrouillage réciproque (60).

2. Système de rayonnage modulaire (80) selon la revendication 1, dans lequel l'appareil de commutation électrique (10) s'interface avec l'ensemble chariot (90).

3. Système de rayonnage modulaire (80) selon la revendication 1, dans lequel l'ensemble chariot (90) comprend une pluralité de fixations (129) agencées pour coupler de façon amovible l'appareil de commutation électrique (10) à l'ensemble chariot (90).

4. Système de rayonnage modulaire (80) selon l'une quelconque des revendications précédentes, dans lequel ladite au moins une came s'interface avec ledit au moins un suiveur de came (150).

5. Système de rayonnage modulaire (80) selon l'une quelconque des revendications précédentes, dans lequel :
l'ensemble chariot (90) comprend un ensemble porte d'opérateur de rayonnage (130), l'ensemble porte (130) comportant une porte mobile (132) et un ensemble de liaison d'actionneur de came (140) ;
la porte (132) étant agencée pour être déplacée entre une première position ouverte et une deuxième position fermée, la porte (132) étant en outre fonctionnellement couplée à l'ensemble de liaison d'actionneur de came (140) ;
l'ensemble de liaison d'actionneur de came (140) étant agencé pour se déplacer entre une première position actionnée et une deuxième position non actionnée, l'ensemble de liaison d'actionneur de came (140) étant dans une première position actionnée lorsque la porte (132) est dans la première position ouverte et l'ensemble de liaison d'actionneur de came (140) étant dans la deuxième position, non actionnée, lorsque la porte (132) est dans la deuxième position fermée ;
ledit ensemble de liaison d'actionneur de came (140) étant en outre couplé à ladite au moins une came ; et
dans lequel lorsque la porte (132) est déplacée vers la première position ouverte, l'ensemble de liaison d'actionneur de came (140) est déplacé vers la première position actionnée, et ladite au moins une came est actionnée.

6. Système de rayonnage modulaire (80) selon la revendication 5, dans lequel :
ladite au moins une came comprend deux cames, une première came (115) et une deuxième came (117) ;
ledit au moins un suiveur de came comprend deux suiveurs de came, un premier suiveur de came (154) et un deuxième suiveur de came (156) ;
dans lequel lorsque l'appareil de commutation électrique (10) est disposé sur l'ensemble chariot (90), la première came (115) de l'ensemble chariot contacte fonctionnellement le premier suiveur de came (154) ;
lorsque l'appareil de commutation électrique (10) est disposé sur l'ensemble chariot (90), la deuxième came (117) de l'ensemble chariot contacte fonctionnellement le deuxième suiveur de came (156) ;
la première came (115) étant agencée pour être actionnée lorsque la porte (132) est déplacée vers la première position ; et
la deuxième came (117) étant agencée pour être actionnée lorsque l'opérateur de rayonnage (118) est actionné.

7. Système de rayonnage modulaire (80) selon la revendication 5, dans lequel :
l'ensemble chariot (90) comprend un verrouillage réciproque d'ensemble porte (200) comportant un actionneur de came (202) et une came de porte (204) ;
l'actionneur de came (202) du verrouillage réciproque d'ensemble porte est couplé au mécanisme d'actionnement (50) et agencé pour agir en réponse à la position des contacts (26), l'actionneur de came (202) du verrouillage réciproque d'ensemble porte étant agencé pour se déplacer entre une première position lorsque les contacts (26) sont ouverts, et une deuxième position lorsque les contacts (26) sont fermés ;
la came de porte (204) étant agencée pour se déplacer entre une première position et une deuxième position en réponse à un actionnement par l'actionneur de came (202) du verrouillage réciproque d'ensemble porte ;
la came de porte (204) couplée à l'ensemble porte (130) est couplée à la porte mobile (132) de l'ensemble porte et est agencée pour empêcher la porte mobile (132) de l'ensemble porte d'être ouverte lorsque la came de porte (204) est dans la deuxième position.

8. Système de rayonnage modulaire (80) selon l'une quelconque des revendications précédentes, dans lequel :
l'ensemble chariot (90) comprend un ensemble de base (100), un premier élément de côté vertical (102), et un deuxième élément de côté (104) ;
l'ensemble de base (100) comportant une plaque de base (110) munie d'un premier côté latéral (112) et d'un deuxième côté latéral (114), l'ensemble de base (100) étant agencé pour supporter l'appareil de commutation électrique (10) ;
le premier élément de côté vertical (102) étant couplé au premier côté latéral (112) de l'ensemble de base ;
le deuxième élément de côté vertical (104) étant couplé au deuxième côté latéral (114) de l'ensemble de base (114) ;
le premier élément de côté vertical (102) comportant au moins une roue (120) agencée pour contacter l'un des rails d'enceinte (78) ; et
le deuxième élément de côté vertical (104) comportant au moins une roue (120) agencée pour contacter l'un des rails d'enceinte (78).

9. Système de rayonnage modulaire (80) selon la revendication 8, dans lequel :
l'ensemble de base (100) comprend ledit ensemble de porte d'opérateur de rayonnage (130).

10. Système de rayonnage modulaire (80) selon la revendication 9, dans lequel le premier élément de côté vertical (102) et le deuxième élément de côté vertical (104) comprennent chacun une pluralité de fixations (129) agencées pour coupler de façon amovible l'appareil de commutation électrique (10) à l'ensemble chariot (90).
